# EUROPEAN PATENT APPLICATION

(11) **EP 3 424 385 A1**
(43) Date of publication of application: **09.01.2019**
(21) Application number: 17180039.4
(22) Date of filing: 06.07.2017
(51) Int. Cl.: A47K 13/02, A47K 13/24, B32B 3/30, B32B 21/02, B32B 21/08, B32B 27/30

(54) **TOILET LID WITH A LENTICULAR IMAGE**

(71) Applicant: Guizhou Topseat Technology Company Limited, Anshun, Guizhou 561100 (CN)
(72) Inventor: XIONG, Ling, Danjiangkou City Hubei 442700 (CN)
(74) Representative: Kaufmann, Tobias

(57) **Abstract**

The invention relates to toilets and more particularly to a toilet lid and toilet seat that includes an aesthetic object. The toilet lid comprises a core structural layer having a shape and size associated with the toilet lid, the core structural layer having first and second surfaces opposite each other and substantially the same shape and size as the toilet lid, the core structural layer having a depressed portion on the first surface of the core structural layer to form a cavity, an at least partially transparent planar first exterior layer disposed on the first surface of the core structural layer and configured to cover the cavity, and at least one aesthetic object disposed within the cavity, wherein the aesthetic object is a lenticular image.

## Description

### FIELD OF INVENTION

This disclosure is generally directed to toilets and more particularly to a toilet lid and seat that includes a lenticular image.

### BACKGROUND

Toilet seats have existed in various forms for many decades. Usually, they comprise a seating board having a circumferential seating surface around a hole that is substantially positioned in the middle and matches the aperture of the toilet bowl. The seating board provides a surface on which the occupant can seat comfortably. In addition, such toilet seats often comprise a lid, which may cover the seating board and thus provide a protective cover for both the seating board and the toilet bowl aperture.

Most toilet seats, both seating board and lid parts, have plain, non-adorned surfaces which do not include any type of embellishments such as painting, photographs, or engraving.

Only a small proportion of toilet seats available on the market have adorned or decorated surfaces. For instance, toilet seat lids can be adorned with silk-screen printing, hand painting, water-transfer printing, heat transfer printing, and the like. As an illustrative example, document WO 2012/138425 A2 discloses toilet seats with such a decorative graphic on the top surface of the toilet lid. However, the toilet seat does not allow an exhaustive decorated surface such as a three-dimensional (3-D) image or a moving image due to the thickness and the inherent shape of lenticular images.

Document WO 2014/022472 relates to toilet seats of a composite material with a lenticular image including a protective cover sheet attached to the lenticular image. However, the toilet seat involves a complex method of manufacturing and makes the toilet seat heavy and expensive to manufacture. Furthermore, providing a protective layer molded to the lenticular image tends to change effect of the lenticular image.

Document US 2012/0266371 A1 relates to laminate toilet lid having an aperture and an aesthetic object in the cavity. However, it does not allow the use of a lenticular image to be displayed since when the said cavity is filled with hardening fluid, it increases the weight of the lid and causes distortion of the image. Otherwise, the cavity contains large empty space, it causes the transparent layer covering the cavity to break on even a slight application of pressure inadvertently.

Therefore, there is a need for an improved, cost efficient, light weight and durable toilet lid for a lenticular image.

### SUMMARY OF THE INVENTION

The above objective is achieved by the present disclosure of the toilet lid having a cavity and lenticular image disposed within the cavity.

According to an embodiment of the present disclosure, a toilet lid is provided comprising a core structure having a depressed portion on the first surface of the core structure to form a cavity. An aesthetic objection such as an lenticular image is disposed within the cavity formed by the depressed portion. An at least partially transparent exterior layer disposed on the first surface of the core structure covers the cavity formed in the toilet lid which is configured to display one or more decorative or aesthetic objects.

In one embodiment of the invention, a toilet lid is disclosed. A toilet lid comprising a core structural layer having a shape and size associated with the toilet lid, the core structural layer having first and second surfaces opposite each other and substantially the same shape and size as the toilet lid, the core structural layer having a depressed portion on the first surface of the core structural layer to form a cavity, an at least partially transparent planar first exterior layer disposed on the first surface of the core structural layer and configured to cover the cavity, and at least one aesthetic object disposed within the cavity, wherein the aesthetic object is a lenticular image.

In another embodiment of the invention the toilet lid further comprising a planar second exterior layer disposed on the second surface of the core structural layer.

In yet another embodiment of the toilet lid, the core structural layer comprises medium density fiberboard (MDF) and/or plastic, and the first and second exterior layers comprise polymethyl-methacrylate (PMMA).

In yet another embodiment of the toilet lid, the at least one aesthetic object is secured to any of the surfaces of the cavity formed by the core structural layer and the first exterior layer.

In yet another embodiment of the toilet lid, the thickness of the at least one aesthetic object is substantially the same as the depth of the cavity.

In yet another embodiment of the toilet lid, the size and shape of the at least one aesthetic object is substantially the same as the size and shape of the cavity.

In yet another embodiment of the toilet lid, the lenticular image comprises a lenticular lens; and the lenticular lens is arranged on the lenticular image in a vertical or a horizontal direction.

In yet another embodiment of the toilet lid, the first exterior layer is configured to cover the depressed portion on the core structural layer such that the first exterior layer encloses the depressed portion to form a cavity.

In yet another embodiment of the toilet lid, the first exterior layer and/or the second exterior layer is at least partially transparent.

In yet another embodiment of the toilet lid, the toilet lid comprises at least one additional layer which is at least partially disposed between the core structural layer and the first exterior layer and/or the core structural layer and the second exterior layer.

In yet another embodiment of the toilet lid, the at least one additional layer comprises an image disposed on at least one of the surfaces of the additional layer.

According to another embodiment of the present disclosure, a toilet lid assembly is provided, comprising a toilet lid; and a toilet seat connected to the toilet lid by hinged hardware, wherein the toilet lid comprises a core structure having a depressed portion on the first surface of the core structure to form a cavity.

According to another embodiment of the present disclosure, a method for manufacturing the toilet lid is provided. The method comprising providing a core structural layer of the toilet lid, the core structural layer having a depressed portion forming a cavity on a first surface, placing at least one aesthetic object within the cavity, applying a first exterior layer to a first surface of the core structural layer thereby covering the cavity thereby covering the cavity such that the first exterior layer and the core structural layer enclose the depressed portion to form a cavity.

In an embodiment, the method of manufacturing a toilet lid comprises providing a core structural layer of the toilet lid, the core structural layer having a depressed portion forming a cavity on a first surface, placing at least one aesthetic object within the cavity, applying a first exterior layer to a first surface of the core structural layer thereby covering the cavity thereby covering the cavity such that the first exterior layer and the core structural layer enclose the depressed portion to form a cavity.

In another embodiment, the method of manufacturing further comprising securing the at least one aesthetic object to core structural layer, and applying a second exterior layer to a second surface of the core structural layer.

In yet another embodiment, the method of manufacturing further comprising substantially filling the cavity with a transparent fluid, the fluid surrounding the at least one aesthetic object; and allowing the fluid to harden.

### BRIEF DESCRIPTION OF THE DRAWINGS

For a complete understanding of this disclosure and its features, reference is now made to the following description, taken in conjunction with the accompanying drawings, in which:
FIG. 1 illustrates a toilet that includes a toilet lid having a display cavity, according to one embodiment of the present disclosure;
FIG. 2 illustrates a top plan view and a cross sectional view of a toilet lid, according to one embodiment of the present disclosure;
FIG.3 illustrates the lenticular image;
FIG. 4 depicts a method for manufacturing a composite toilet lid, according to one embodiment of the present disclosure.

### DETAILED DESCRIPTION

The present disclosure provides a toilet lid that includes at least partially transparent top and a cavity formed in the toilet lid configured to display one or more decorative or aesthetic objects.

The toilet lid according to this disclosure offers many advantages. The toilet lid may be customized to display one or more objects to convey a message or impression that may be of interest to a user. In addition, the toilet lid according to this disclosure is constructed to be more durable and retain its original appearance for a longer period than conventional toilet lids.

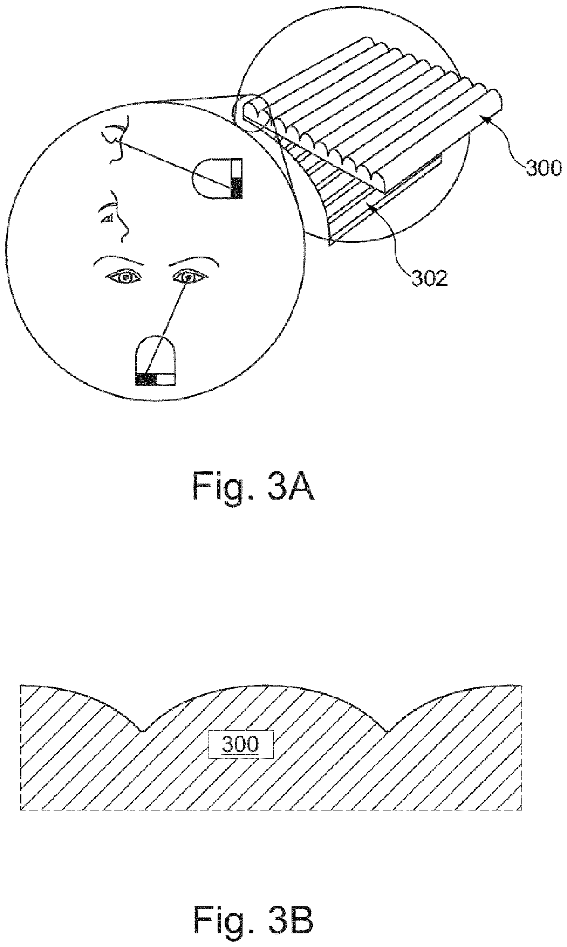

The present disclosure provides a toilet lid and seat configured to include decorative or aesthetic elements such as a three-dimensional image or a motion effect three-dimensional image. In general, three-dimensional images create the visual impression that portions of the image are closer to the viewer while other portions of the image are further away. Motion effect three-dimensional images, when viewed at different angles, appear to move, or create a movie like an image. This is achieved by providing a lenticular image as will be explained later in Fig.3.

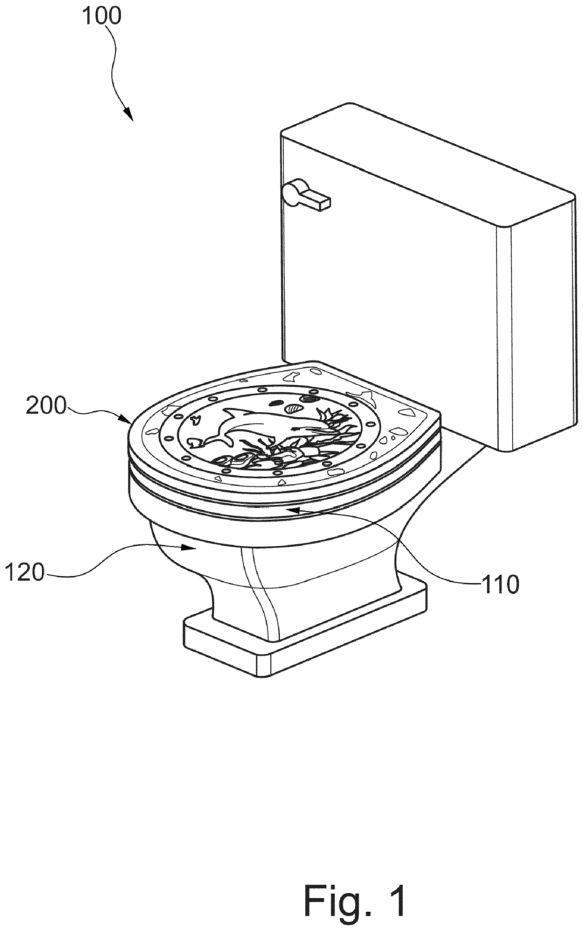

FIG. 1 illustrates a toilet that includes a toilet lid having a display cavity, according to one embodiment of the present disclosure. The embodiment of the toilet shown in FIG. 1 is for illustration only. Other embodiments of the toilet could be used without departing from the scope of this disclosure.

As shown in FIG. 1, a toilet 100 is fitted with a toilet lid 200 and toilet seat 110 over a bowl 120. The toilet 100 may be any suitable toilet with a bowl that is configured to be covered by a seat and lid. The bowl 120 has an opening that is generally round or oval shaped. The toilet lid 200 and toilet seat 110 have an overall size and shape configured to match the size and shape of the bowl 120 generally and to cover the opening of the bowl 120. The toilet lid 200 and toilet seat 110 attached to a rear portion of the bowl 120 or toilet 100 using hinged hardware that allows the toilet lid 200 and toilet seat 110 to raise and lower independently with respect to the bowl 120 and to each other, as is known in the art.

In accordance with the present disclosure, the toilet lid 200 includes a cavity 210 disposed on a middle portion of the toilet lid 200. The cavity 210 is generally round or oval shaped and is enclosed by a top layer and a bottom layer of the toilet lid 200, as described in greater detail below. The cavity 210 is configured to accommodate one or more aesthetic or decorative objects.

Although FIG. 1 depicts one example of a toilet 100 with a toilet lid 200, various changes may be made to FIG. 1. For example, while the cavity 210 is depicted as generally round or oval shaped, the cavity 210 could include other shapes, such as a rectangle or octagon. Likewise, the toilet lid 200 could include more than one cavity 210.

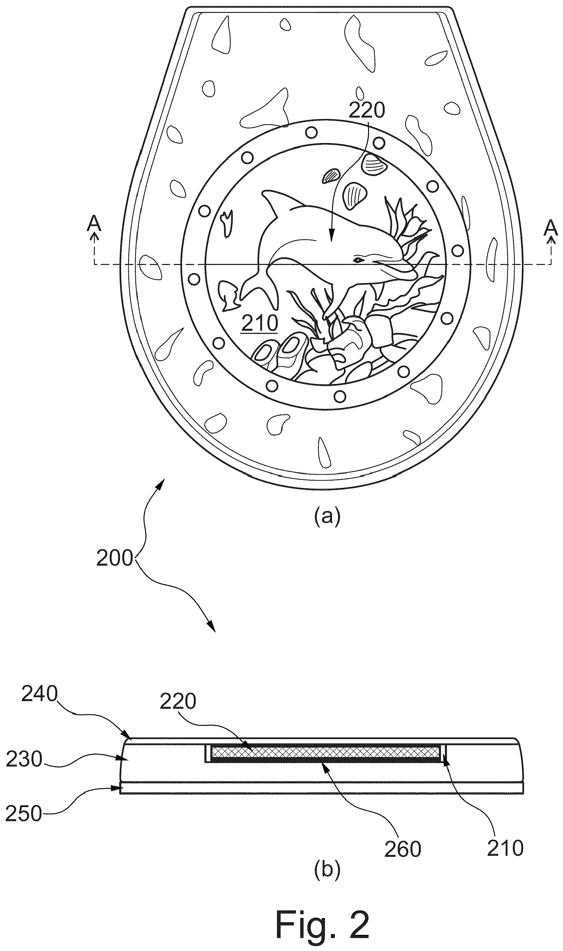

FIG. 2 illustrates a top plan view and a cross sectional view of a toilet lid, according to one embodiment of the present disclosure. The embodiment of the toilet lid 200 shown in FIG. 2 is for illustration only. Other embodiments of the toilet lid 200 could be used without departing from the scope of this disclosure, and it will be understood that the toilet lid 200 may represent any other similarly arranged toilet lid.

As shown in FIG. 2(a), the toilet lid 200 includes a cavity 210. One or more aesthetic or decorative objects (represented by decorative object 220) are disposed within the cavity 210. The decorative object 220 may represent any picture, graphic, toy, or any other suitable object, and may be chosen to appeal to a user of a toilet where the toilet lid 200 is installed. In the present invention, the decorative object 220 is a lenticular image such as a three-dimensional image or a moving image.

FIG. 2(b) shows a cross sectional view of the toilet lid 200 taken along the line A-A of FIG. 2(a). The toilet lid according to one embodiment of this disclosure is constructed with three (3) layers of material: a core structural layer 230 having a depressed portion, at least partially transparent top layer 240 disposed on a top side of the core structural layer, and a bottom layer 250 disposed on a bottom side of the core structural layer. In some embodiments of the disclosure, the bottom layer 250 may not be provided, and the core structural layer 230 adequately supports the lid. For clarity of illustration, the thickness of each layer 230, 240, 250 may not be drawn to scale.

The cavity 210 is formed on the depressed portion of the core structural layer. The cavity 210 is enclosed by the core structural layer on the sides and the bottom and is covered by on the top by the top layer 240 toilet lid 200. As shown in FIG. 2(b), the decorative object 220 is disposed within the cavity 210 and rests on the surface of the depressed portion of the core surface. The top layer may be partially or fully clear to allow the decorative object 220 to be viewed. By providing a top layer, it is possible to cover the lenticular image from external contact. Therefore, it avoids the need to use an additional protective layer for the lenticular image.

Although the vertical walls of the depressed portion are depicted in FIG. 2(b) as straight, the vertical walls may also be curved or appropriately shaped to accommodate the decorative object 220. In one embodiment of the disclosure, the walls of the depressed portion are substantially the same height as the thickness of the lenticular image which is disposed within the cavity. And the thickness of the aesthetic object is substantially the same or slightly smaller than the depth of the cavity. This allows for a snug fit of the lenticular image within the cavity to avoid additional empty space between the lenticular image and the top layer. This ensures that the top layer does not bend too much inwardly causing inadvertent breaking on applying pressure.

The decorative object 220 may be placed anywhere within the limits of the cavity 210 and may be secured to any one or more of the boundaries of the cavity 210 using any suitable means. In the present disclosure, the decorative object 220 is secured to the cavity by means of adhesive layer 260. In one embodiment, the decorative object 220 may be on the surface of the depressed portion of the core surface of the toilet lid 210 with an adhesive or one or more fasteners. In another embodiment, the decorative object 220 may be secured to one or more vertical walls of the cavity 210. In other embodiments, the decorative object 220 may be secured in an elevated position in the cavity 210 so as to appear "floating" in the toilet lid 200. In yet another embodiment, the decorative object 212 may be embedded in a fluid, such as a resin, that substantially fills the cavity 210 and hardens into a solid.

In one embodiment of the disclosure, the size and shape of the cavity are substantially the same as that of the aesthetic object. And the object is selected such that the size and shape of the at least one aesthetic object is substantially the same as the size and shape of the cavity.

Although FIG. 3 depicts one example of a toilet lid 202, various changes may be made to FIG. 3. For example, while the decorative object 212 is shown as one contiguous object, the decorative object 212 may include multiple separate objects that are spaced apart and individually secured within the cavity 210. As another example, the decorative object 212 may be unsecured such that the decorative object 212 is able to freely move within the cavity 210.

The toilet lid 200 comprises three layers 230, 240, and 250. Layer 240 is a top exterior finish layer. Layer 230 is a core structural layer having an aperture that defines the cavity 210. Layer 250 is a bottom exterior finish layer. As shown in FIG. 3, the layers 240, 250 are substantially planar and parallel such that the layers 240, 250 do not make contact with each other. In some embodiments, such as the embodiment shown in FIG. 3, at least two of the edges of the layers 230, 240, 250 together form a contoured, non-planar edge of the toilet lid 200.

In accordance with the present disclosure, the top exterior finish layer 240 may be formed of polymethylmethacrylate (PMMA). PMMA is a transparent, thermoplastic material that is very durable and exhibits excellent optical properties. PMMA is also scratch resistant, can be CNC (computer numerical control) machined, and is more impact resistant than ordinary glass. PMMA is also known by its trade names Plexiglas™ and Lucite™. The thickness of the top exterior finish layer 240 may be selected according to the requirements of the application. In one embodiment, the thickness of the top layer 240 is approximately one to two millimeters (1 mm-2 mm). While the top layer 240 is described as PMMA, the top layer 240 may be formed of another special function glass or any other suitable material that exhibits the advantageous properties of PMMA.

In some embodiments, the top exterior finish layer 240 is clear and colorless. However, the top layer 240 is not limited thereto. For example, the top layer 240 may be colored, tinted and/or mirrored. Additionally, the top layer 240 may be smooth or textured, and have a glossy or matte finish.

The core layer 230 may be formed of a medium density fiberboard (MDF) or plastic. As is known in the art, MDF is formed of wood fibers that are held together with one or more waxes or resins such as epoxies, formaldehyde resins, or phenolic resins. The fiber content and thickness of the MDF core layer 230 may vary based on application requirements. The core layer may be made of plastic. For example, a thermosetting plastic such as Duroplast may be used. The core layer 206 accounts for most of the thickness of the toilet lid 202 and provides most of the rigidity of the toilet lid 200. In one embodiment, the thickness of the core layer 206 is approximately twenty millimeters (20 mm). In an embodiment, one or both sides of the core layer 230 are painted or coated to hide or protect the finish of the MDF material.

Although the core layer 230 is described as being formed of MDF or plastic, other materials may be used. For example, the core layer 230 may be formed of another composite wood, such as hardwood plywood (HWPW), particleboard (PB), high density fiber board (HDF), molded wood, resin plastic reinforced with fibers, fiberglass, or any other suitable material. In an embodiment, the core layer 230 may be formed of two or more sub-layers, each sub-layer comprising one of the materials described above.

In one embodiment, the bottom exterior finish layer 250 may be formed of the same material as the top exterior finish layer 240. For example, the bottom exterior finish layer 250 may be formed of PMMA.

In one embodiment, additional layers may be provided between the core layer 230 and the first layer 240. For example, an additional layer comprising a paper of plastic may be disposed between the core layer 230 and first layer 240 and/or second layer 250. The additional layer may comprise an image disposed on the said paper or plastic and adhered to any of the core layer 230 and/or the first layer 240 and/or the second layer 250.

In one embodiment, the additional layer may be partially disposed between the two layers. For example, the layer may be formed only on the surface of the core structure excluding the depressed portion.

In one embodiment, the additional layer comprises an image disposed on at least one of the surfaces of the said additional layer.

In accordance with the present disclosure, the aesthetic object 220 is a lenticular image which provides a three-dimensional image and/or a motion effect. The lenticular image is formed by the combination of a lenticular lens 300 with is placed on a lenticular image. Although only a lenticular image is referenced in the disclosure, it is understood that such a lenticular image may be produced by any technology and not only the lenticular image is fixed to a lenticular lens.

Fig.3A and 3B illustrate cross-section views of a lenticular lens 300, according to embodiments of the present disclosure. In order to generate an image having a three-dimensional effect or a motion effect, the surface of the lenticular lens 300 is made of a series of arches. The lenticular image 302 comprises two or more individual images that are interlaced in bands across the image 302. Arches on the lenticular lens 300 cause a shift in the lenticular image 302 that allows a viewer to see one of the individual images making up a complete image below the lenticular lens 300, without seeing the other image (s). The arches that allow for the three-dimensional effects also cause the surface to be uneven and not smooth.

Depending on the alignment of the lenticular image and the lenticular lens on the lenticular image, it is possible to change the motion effect of the image. For example, if the lenticular lens and the lenticular image are placed vertical to the viewing angle, it is possible to provide a three-dimensional view by obtaining different views on the right eye and the left eye as seen in Fig.3A. On the other hand, if the lenticular image and lenticular lens is horizontally aligned, it is possible to provide a motion effect when the image is seen from top to bottom as seen in Fig. 3A. Therefore, by providing a lenticular image and lens appropriately on the toilet lid, it is possible to provide a motion effect when the toilet lid it lifted or a three-dimensional effect as necessary. For example, in the present disclosure, the lenticular image may be provided such that the dolphin on the image 220 may seem to be jumping out depending on the movement of the person or opening the lid is lifted from the toilet seat.

The three-dimensional image may be provided by a smooth protective layer to cover, over what is ordinarily a rough and uneven lenticular lens surface. Having a smooth surface allows for greater ease in cleaning when compared to unprotected lenticular 3D-adorned items. The protective layer, according to embodiments of this disclosure, may comprise a cover sheet made from any number of materials such as Polymethylmethacrylate (PMMA), Polyethylene Terephthalate (PET), Propylene Carbonate (PC), Polyethylene (PE) , Polypropylene (PP) , and/or Polyvinyl Chloride (PVC) .

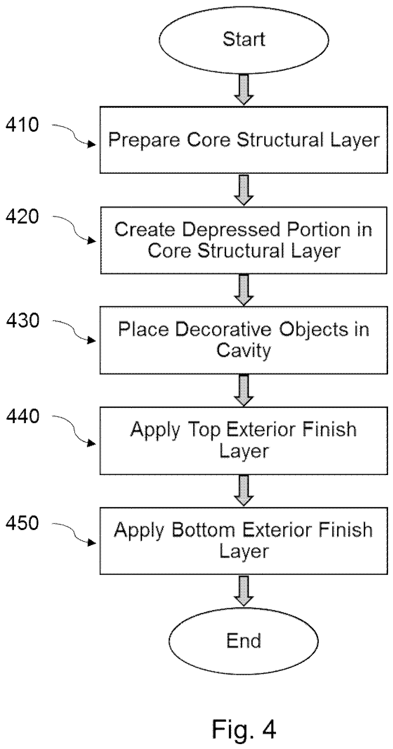

FIG. 4 depicts a method for manufacturing a toilet lid (e.g., toilet lid 200), according to one embodiment of the present disclosure. The method shown in FIG. 4 is for illustration only. Other embodiments of the method could be used without departing from the scope of this disclosure.

First, a core structural layer (e.g., layer 220) is prepared to have a size and shape suitable for its application (step 410). Preparation of the core structural layer may include painting one or more surfaces of the core structural layer. Next, depression is formed in the core structural layer (step 420) to form the contours of a cavity. The edges or walls of the cavity are shaped and finished according to the chosen application. For example, the aperture walls may be beveled, curved, painted, coated, or otherwise finished using methods known in the art.

Next, one or more decorative objects are placed in the cavity formed by the depressed portion of the core structure (step 430). The objects may be arranged and secured or left unsecured. In an embodiment, a transparent fluid may be injected or poured into the cavity and around the decorative objects, and allowed to cure and harden, thus securing the objects in place.

Next, a top exterior finish layer (e.g., layer 230) is applied to the top surface of the core structural layer (step 440). The top exterior finish layer is attached to the core structural layer with an adhesive, one or more fasteners, or any other suitable means for attaching adjoining materials. An additional layer if any, may be adhered to the lower surface of the top exterior layer prior to attaching it to the core structural layer.

Next, a bottom exterior finish layer (e.g., layer 250) is applied to a bottom surface of the core structural layer (step 450). The bottom exterior finish layer is attached to the core structural layer with an adhesive, one or more fasteners, or any other suitable means for attaching adjoining materials. An additional layer if any, may be adhered to the upper surface of the exterior finish layer prior to attaching it to the core structural layer.

The seams between the adjoining layers may be finished according to known techniques in order to create a smooth transition. Once the exterior finish layers are completely applied, the exterior finish layers envelop the cavity and provide protection to the decorative objects while allowing the decorative objects to be seen from one or both sides.

Although FIG. 4 illustrates one example of a method of manufacturing a toilet lid, various changes may be made to FIG. 4. For example, while shown as a series of steps, various steps in FIG. 4 may overlap, occur in parallel, occur in a different order, or occur multiple times.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

For ease of explanation, the remaining disclosure will generally refer only to a toilet lid. However, it will be understood that the embodiments described below are also applicable to a toilet seat, or both, as described previously.

## Claims

1. A toilet lid, comprising:
a core structural layer having a shape and size associated with the toilet lid, the core structural layer having first and second surfaces opposite each other and substantially the same shape and size as the toilet lid,
the core structural layer having a depressed portion on the first surface of the core structural layer to form a cavity;
an at least partially transparent planar first exterior layer disposed on the first surface of the core structural layer and configured to cover the cavity, and
at least one aesthetic object disposed within the cavity, wherein the aesthetic object is a lenticular image.

2. The toilet lid of claim 1, further comprising:
a planar second exterior layer disposed on the second surface of the core structural layer.

3. The toilet lid of any of claims 1 or 2, wherein
the core structural layer comprises medium density fiberboard (MDF) and/or plastic, and
the first and second exterior layers comprise polymethyl-methacrylate (PMMA).

4. The toilet lid of any of claims 1 to 3, wherein the at least one aesthetic object is secured to any of the surfaces of the cavity formed by the core structural layer and the first exterior layer.

5. The toilet lid of any of claims 1 to 4, wherein the thickness of the at least one aesthetic object is substantially the same as the depth of the cavity.

6. The toilet lid of any of claims 1 to 5, wherein the size and shape of the at least one aesthetic object is substantially the same as the size and shape of the cavity.

7. The toilet lid of any of claims 1 to 6, wherein the lenticular image comprises a lenticular lens; and the lenticular lens is arranged on the lenticular image in a vertical or a horizontal direction.

8. The toilet lid of any of claims 1 to 7, wherein the first exterior layer is configured to cover the depressed portion on the core structural layer such that the first exterior layer encloses the depressed portion to form a cavity.

9. The toilet lid of any of claims 1 to 8, wherein the first exterior layer and/or the second exterior layer is at least partially transparent.

10. The toilet lid of any of claims 1 to 9, wherein the toilet lid comprises at least one additional layer which is at least partially disposed between the core structural layer and the first exterior layer and/or the core structural layer and the second exterior layer.

11. The toilet lid of claim 10, wherein the at least one additional layer comprises an image disposed on at least one of the surfaces of the additional layer.

12. A toilet lid assembly, comprising:
a toilet lid; and
a toilet seat connected to the toilet lid by hinged hardware,
wherein the toilet lid is a toilet lid as claimed in any of the claims 1 to 11.

13. A method of manufacturing a toilet lid, the method comprising:
providing a core structural layer of the toilet lid, the core structural layer having a depressed portion forming a cavity on a first surface;
placing at least one aesthetic object within the cavity;
applying a first exterior layer to a first surface of the core structural layer thereby covering the cavity thereby covering the cavity such that the first exterior layer and the core structural layer enclose the depressed portion to form a cavity.

14. The method of claim 13, further comprising
securing the at least one aesthetic object to core structural layer, and
applying a second exterior layer to a second surface of the core structural layer.

15. The method of any one of claims 13 or 14, further comprising substantially filling the cavity with a transparent fluid, the fluid surrounding the at least one aesthetic object; and allowing the fluid to harden.
